# EUROPÄISCHE PATENTSCHRIFT

(11) **EP 3 097 754 B1**
(45) Veröffentlichungstag und Bekanntmachung des Hinweises auf die Patenterteilung: **20.06.2018**
(21) Anmeldenummer: 16170983.7
(22) Anmeldetag: 05.05.2015
(51) Int. Cl.: A01B 69/00, A01B 79/00

(54) **LANDWIRTSCHAFTLICHE ARBEITSMASCHINE**
AGRICULTURAL WORKING MACHINE
MACHINE AGRICOLE

(30) Priorität: 14.05.2014 DE 102014106775
(43) Veröffentlichungstag der Anmeldung: 30.11.2016
(62) Teilanmeldung aus: 15401040.9
(73) Patentinhaber: Amazonen-Werke H. Dreyer GmbH & Co. KG, 49205 Hasbergen (DE)
(72) Erfinder: ENGE, Tobias, 48477 Hörstel (DE); MINDRUP, Tobias, 49080 Osnabrück (DE); WESSELS, Thomas, 49080 Osnabrück (DE)

(56) Entgegenhaltungen:
- EP-A1- 1 493 316
- EP-A1- 1 529 428
- WO-A1-2012/149415
- DE-A1-102006 055 858

## Beschreibung

Die Erfindung betrifft eine landwirtschaftliche Arbeitsmaschine nach dem Oberbegriff des Anspruchs 1 und ein Verfahren zum Steuern eines Arbeitsgeräts einer landwirtschaftlichen Arbeitsmaschine gemäß dem Oberbegriff des Anspruchs 13.

Gattungsgemäße landwirtschaftliche Arbeitsmaschinen sind aus dem Stand der Technik bekannt. So zeigt beispielsweise die EP 2 679 085 A1 eine landwirtschaftliche Arbeitsmaschine mit einem Arbeitsgerät, wobei an dem Arbeitsgerät eine Sensoreinheit, insbesondere eine Ultraschallsensoreinheit, angeordnet ist, die die Abstandsmessung gegenüber dem unter dem Arbeitsgerät befindlichen Boden übernimmt und anhand des gemessenen Abstands einen Bearbeitungsabstand berechnet, demgemäß das Arbeitsgerät, beispielsweise der Düngemittelspritzer, betrieben wird.

Die EP 1 529 428 A1 offenbart ein Verfahren zum selbsttätigen Lenken einer landwirtschaftlichen Maschine, wobei mittels einer Kamera der vor der Maschine liegende Bereich des Feldes abgebildet und mittels einer Bildauswertung die zu bearbeitende Fläche bzw. Flächenbereiche erkannt und Lenksignale generiert werden. Die bekannten landwirtschaftlichen Arbeitsmaschinen und vorgesehenen Sensoren ermöglichen jedoch eine Anpassung der Arbeitshöhe oder anderen Betriebsparametern der landwirtschaftlichen Arbeitsmaschine nur in sehr begrenztem Umfang, da die zwischen Messung und notwendiger Schaltung zur Verfügung stehende Zeit sehr kurz ist.

Es ist daher Aufgabe der vorliegenden Erfindung, eine landwirtschaftliche Arbeitsmaschine und ein Verfahren zum Betrieb einer solchen bereitzustellen, das effektiver auf Änderungen in der Umgebung des Arbeitsgeräts reagieren kann.

Diese Aufgabe wird erfindungsgemäß durch die landwirtschaftliche Arbeitsmaschine nach unabhängigem Anspruch 1 und das Verfahren zum Steuern eines Arbeitsgeräts einer landwirtschaftlichen Arbeitsmaschine nach Anspruch 13 gelöst. Vorteilhafte Weiterbildungen der Erfindung sind in den Unteransprüchen erfasst.

Die erfindungsgemäße landwirtschaftliche Arbeitsmaschine ist dadurch gekennzeichnet, dass die Sensoreinrichtung so angeordnet ist, dass sie die wenigstens zweidimensionalen Informationen eines vor der Arbeitsmaschine liegenden Geländes erfassen kann. Dadurch kann bereits in einem gewissen zeitlichen Rahmen vor dem eigentlichen Eintreffen der landwirtschaftlichen Arbeitsmaschine und des Arbeitsgeräts an dem zu bearbeitenden Bereich des Feldes zweidimensionale Informationen über diesen Bereich gesammelt und mit Hilfe der Steuereinrichtung die Steuerung des Arbeitsgeräts vorbereitet bzw. durchgeführt werden. Das Arbeitsgerät kann so deutlich genauer an die Gegebenheiten des vor der Arbeitsmaschine liegenden Geländes angepasst werden, wodurch die Produktivität erhöht werden kann. Unter dem vor der Arbeitsmaschine gelegenen Gelände ist in diesem Zusammenhang nicht nur der Boden des Feldes zu verstehen, sondern auch sämtlicher Bewuchs auf dem Feld. Ebenso zählt dazu nicht nur die Oberfläche des Bodens sondern auch tiefer gelegene Bodenschichten. Das Erfassen von 2D-Informationen bezieht sich auf Informationen des Geländes, die in einer Ebene senkrecht zur Fahrtrichtung des Fahrzeuges erfasst werden. Diese Ebene kann in Fahrtrichtung eine gewisse Ausdehnung besitzen, die beispielsweise über das Blickfeld der Sensoreinrichtung bestimmt wird. Obwohl sich dadurch ein dreidimensionaler Ausschnitt des Geländes ergibt, soll dies unter dem Begriff der (im Wesentlichen) zweidimensionalen Information zusammengefasst werden. Die Arbeitsmaschine ist ferner als Saatmaschine ausgebildet, wobei sie dadurch gekennzeichnet ist, dass die Sensoreinrichtung einen Mikrowellensensor und ein Bildaufnahmegerät umfasst, wobei der Mikrowellensensor die Bodenfeuchte ermitteln und das Bildaufnahmegerät die Bodenkontur bestimmen kann, wobei die Steuereinheit in Abhängigkeit der Bodenfeuchte und Bodenkontur eine geeignete Saattiefe bestimmen kann. Es werden so die Vorteile der beschriebenen landwirtschaftlichen Arbeitsmaschine für eine Saatmaschine genutzt.

In einer Ausführungsform ist die Sensoreinrichtung ausgebildet, um Informationen des vor der Arbeitsmaschine liegenden Geländes kontinuierlich oder in bestimmten Zeitintervallen zu erfassen. Durch kontinuierliches Messen kann ein zweidimensionales Abbild der gesamten Umgebung erstellt werden und so eine lückenlose Steuerung des Arbeitsgeräts erreicht werden. Handelt es sich jedoch um eine zu erfassende Information, beispielsweise die Höhe des Feldbodens an bestimmten Stellen, so kann eine Messung in deutlich größeren Zeitabständen, beispielsweise 3 oder 5 Sekunden genügen, um eine grobe Information über das Verhalten des Geländes zu erlangen.

Weiterhin kann die Sensoreinrichtung ausgebildet sein, Informationen des vor der Arbeitsmaschine liegenden Geländes wenigstens über einen Bereich, der der Arbeitsbreite des Arbeitsgeräts entspricht, zu erfassen. Da für eine effektive Ausbringung von Material oder Bearbeitung eines Feldes nicht die Breite des eigentlichen Zugfahrzeugs sondern die Arbeitsbreite relevant ist, kann mit dieser Ausführungsform gewährleistet werden, dass eine Erfassung und damit einhergehende Auswertung von Informationen über die gesamte Arbeitsbreite des Arbeitsgeräts durchgeführt wird, um das Ergebnis zu optimieren.

Es kann auch vorgesehen sein, dass die Sensoreinrichtung am Zugfahrzeug und/oder am Arbeitsgerät angeordnet ist. Die Anordnung am Zugfahrzeug erlaubt eine Erfassung des vor der Arbeitsmaschine liegenden Geländes sogar vor Erreichen des Zugfahrzeugs, wohingegen eine Anbringung der Sensoreinrichtung am Arbeitsgerät zwar eine nur verkürzte Reaktionszeit ermöglicht, jedoch Veränderungen in den Gegebenheiten des Geländes durch das Überfahren mit dem Zugfahrzeug berücksichtigt werden können.

In einer Weiterbildung ist die Arbeitsmaschine dadurch gekennzeichnet, dass die Sensoreinrichtung 3D-Informationen eines vor der Arbeitsmaschine liegenden Geländes erfassen kann. 3D-Informationen liefern eine noch detailliertere Grundlage für eine Berechnung und Steuerung des Arbeitsgeräts. Das Erfassen von 3D-Informationen umfasst dabei in jedem Fall auch die vorher beschriebenen zweidimensionalen Informationen des Geländes.

Ferner kann die Arbeitsmaschine einen Geschwindigkeitssensor umfassen, der eine aktuelle Geschwindigkeit der Arbeitsmaschine messen und ein für die Geschwindigkeit indikatives Signal an die Steuereinheit übertragen kann, wobei die Steuereinheit die wenigstens eine Funktion des Arbeitsgeräts basierend einer Extrapolation der Geschwindigkeit der Arbeitsmaschine und einem so ermittelten Zeitpunkt, wann das Arbeitsgerät sich über einem von der Sensoreinrichtung vermessenen Bereich des Geländes befindet, zu steuern. Durch Verknüpfung der von dem Gelände erfassten Informationen und Bewegungsinformationen kann hier in vorteilhafter Weise vorausberechnet werden, wann eine Steuerung des Arbeitsgeräts erforderlich ist und so der optimale Zeitpunkt für beispielsweise eine Veränderung der Arbeitshöhe ermittelt werden.

Die erfindungsgemäße Arbeitsmaschine ist dadurch gekennzeichnet, dass die Sensoreinrichtung ein optischer Sensor ist oder einen optischen Sensor umfasst, wobei die Sensoreinrichtung Bestandshöhen von auf dem vor der Arbeitsmaschine liegenden Gelände befindlichen Bestand messen kann und die Steuereinheit eine Arbeitshöhe des Arbeitsgeräts in Abhängigkeit der Bestandshöhe steuert. Mit dieser Ausführungsform werden die Vorteile der landwirtschaftlichen Arbeitsmaschine auf die Bestimmung der Arbeitshöhe des Arbeitsgeräts in Abhängigkeit der Bestandshöhe angewendet.

In einer Weiterbildung dieser Ausführungsform ist vorgesehen, dass die Sensoreinrichtung eine Kamera ist, und die Steuereinheit aus der Bildinformation von durch die Kamera aufgenommenen Bilder eine Bestandshöhe bestimmen kann, oder dass die Sensoreinrichtung ein Laser ist, der eine Abstandsmessung zu vor der Arbeitsmaschine befindlichem Bestand durchführen kann, und die Steuereinheit aus der Abstandsmessung eine Bestandshöhe errechnen kann. Während Kameras nur eine relativ grobe Information liefern, die noch mit Bildverarbeitungsprogrammen bearbeitet werden muss, liefert der Laser deutlich genauere Informationen. Beide Ausführungsformen können je nach notwendiger Genauigkeit vorteilhaft benutzt werden.

Vorteilhaft ist, wenn die Steuereinheit aus sämtlichen zu einem Zeitpunkt ermittelten Bestandshöhen eines bestimmten Bereichs des Geländes eine optimale Arbeitshöhe für das Arbeitsgerät errechnen kann. Da es im Sinne einer ökonomischen Bearbeitung des Feldes vorteilhaft sein kann, nicht immer die maximale oder minimale Arbeitshöhe, die anhand der Informationen möglich wäre, anzusteuern, kann mit Hilfe der optimalen Arbeitshöhe unter Berücksichtigung eventuell weiterer Betriebsparameter ein Gleichgewicht zwischen idealer Bearbeitung und ökonomischen Gesichtspunkten gefunden werden.

Alternativ kann die Arbeitsmaschine als Saatmaschine ausgebildet sein, wobei sie dadurch gekennzeichnet ist, dass die Sensoreinrichtung einen Mikrowellensensor und ein Bildaufnahmegerät umfasst, wobei der Mikrowellensensor die Bodenfeuchte ermitteln und das Bildaufnahmegerät die Bodenkontur bestimmen kann, wobei die Steuereinheit in Abhängigkeit der Bodenfeuchte und Bodenkontur eine geeignete Saattiefe bestimmen kann. Es werden so die Vorteile der beschriebenen landwirtschaftlichen Arbeitsmaschine für eine Saatmaschine genutzt.

In einer Ausführungsform arbeitet der Mikrowellensensor nach dem Reflexionsverfahren und ermittelt kontinuierlich und berührungslos die Bodenfeuchte.

Es kann vorgesehen sein, dass die Steuereinheit aus allen zu einem Zeitpunkt ermittelten Bodenfeuchten und Bodenkonturen eines bestimmten Bereichs des Geländes eine optimale Saattiefe bestimmen kann. Auch hier kann ein Gleichgewicht zwischen ökonomischen Gesichtspunkten und der optimalen Bearbeitung des Feldes gefunden werden, was die Produktivität erhöht.

Das erfindungsgemäße Verfahren zum Steuern eines Arbeitsgeräts einer landwirtschaftlichen Arbeitsmaschine ist dadurch gekennzeichnet, dass wenigstens eine Funktion des Arbeitsgeräts in Abhängigkeit von 2D-Informationen über ein vor der Arbeitsmaschine liegendes Gelände gesteuert wird. Diese vorausschauende Erfassung von Informationen ermöglicht eine möglichst effektive Steuerung des Arbeitsgeräts.

Das Verfahren kann beinhalten, dass Informationen des vor der Arbeitsmaschine liegenden Geländes kontinuierlich oder in bestimmten Zeitintervallen erfasst werden. So kann ein Gleichgewicht zwischen der benötigten Informationsmenge und dem ökonomischen Umgang mit gesammelten Daten erreicht werden.

In einer Weiterbildung sind die Zeitintervalle variabel und werden in Abhängigkeit von der Geschwindigkeit und/oder Beschleunigung der Arbeitsmaschine eingestellt. Werden Bewegungsdaten der landwirtschaftlichen Arbeitsmaschine berücksichtigt, um die Intervalle zur Informationsaufnahme bzw. -erfassung zu bestimmen, kann stets dieselbe Genauigkeit bei der Erfassung der Informationen sichergestellt werden.

Weiterhin können Informationen über das vor der Arbeitsmaschine liegende Gelände wenigstens über die Arbeitsbreite des Arbeitsgeräts bestimmt werden. Dies erlaubt eine Berücksichtigung sämtlicher für die Bearbeitung des Feldes relevanter Informationen.

In einer Ausführungsform werden 3D-Informationen eines vor der Arbeitsmaschine liegenden Geländes erfasst. Mittels dreidimensionalen Informationen kann das Arbeitsgerät genauer gesteuert werden.

Es ist vorteilhaft, wenn die Funktion des Arbeitsgeräts in Abhängigkeit der Informationen über das Gelände zu einem Zeitpunkt gesteuert wird, der abhängig vom Zeitpunkt, zu dem die Informationen über das Gelände aufgenommen wurden, und abhängig von der momentanen Geschwindigkeit der Arbeitsmaschine ist. Somit kann vorausschauend eine genaue Steuerung des Arbeitsgeräts geplant werden.

Das Verfahren kann genutzt werden, um mittels eines optischen Sensors Bestandshöhen von auf dem vor der Arbeitsmaschine liegenden Gelände befindlichen Bestand zu messen und die Arbeitshöhe des Arbeitsgeräts in Abhängigkeit der Bestandshöhen einzustellen. Das erfindungsgemäße Verfahren wird hier auf die Bestimmung der Arbeitshöhe in Abhängigkeit von Bestandshöhen in vorteilhafter Weise angewendet.

In einer Weiterbildung dieser Ausführungsform ist das Verfahren dadurch gekennzeichnet, dass basierend auf von einer Kamera aufgenommenen Bildinformationen des vor der Arbeitsmaschine befindlichen Bestands Bestandshöhen ermittelt werden oder dass eine Abstandsmessung zum Bestand auf dem vor der Arbeitsmaschine befindlichen Gelände durch einen Laser erfolgt und aus dem bestimmten Abstand eine Bestandshöhe ermittelt wird.

Es kann vorgesehen sein, dass aus den zu einem Zeitpunkt ermittelten Bestandshöhen eines bestimmten Bereichs des Geländes eine optimale Bestandshöhe ermittelt und die Arbeitshöhe des Arbeitsgeräts entsprechend dieser optimalen Bestandshöhe eingestellt wird. So kann ein Gleichgewicht zwischen ökonomischen Gesichtspunkten und den ermittelten Bestandshöhen gefunden werden.

Alternativ kann das Verfahren angewendet werden, um mittels eines Mikrowellensensors die Bodenfeuchte und mittels eines Bildaufnahmegeräts die Bodenkontur des vor der Arbeitsmaschine befindlichen Geländes zu bestimmen und in Abhängigkeit der Bodenfeuchte und Bodenkontur eine geeignete Saattiefe zu ermitteln. Das erfindungsgemäße Verfahren kann so auf das Säen von Samen angewandt werden.

In einer Ausführungsform wird die Bodenfeuchte durch Reflexion kontinuierlich und berührungslos bestimmt.

Weiterhin kann aus allen zu einem Zeitpunkt gemessenen Bodenfeuchten und Bodenkonturen eines bestimmten Bereichs des Geländes eine optimale Saattiefe bestimmt werden und das Arbeitsgerät in Abhängigkeit der optimalen Saattiefe gesteuert werden. Auch hier kann für das Aussäen die möglichst optimale Parametereinstellung in Abhängigkeit der aufgenommen Informationen und ökonomischen Gesichtspunkten gefunden werden.

Die Zeichnungen zeigen
- Fig. 1: eine schematische Ansicht einer erfindungsgemäßen Landwirtschaftsmaschine.
- Fig. 2: eine schematische Draufsicht auf eine erfindungsgemäße Landwirtschaftsmaschine auf einem Feld.
- Fig. 3a-e: eine schematische Darstellung der erfindungsgemäßen Vorrichtung gemäß zweier Ausführungsformen und eines Verfahrens.
- Fig. 4a+b: eine schematische Darstellung einer weiteren Ausführungsform des Verfahrens.
- Fig. 5: eine schematische Darstellung einer weiteren Ausführungsform der erfindungsgemäßen landwirtschaftlichen Arbeitsmaschine.

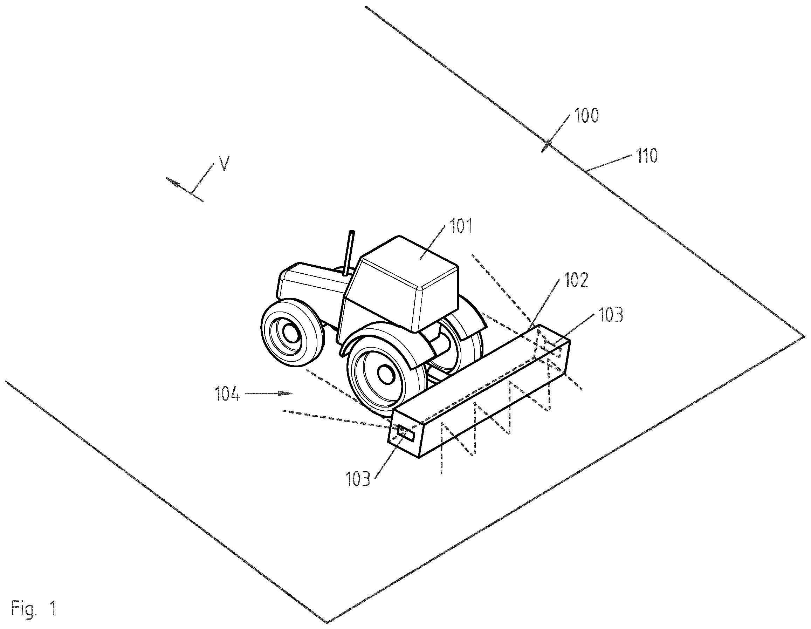

Fig. 1 zeigt eine erfindungsgemäße landwirtschaftliche Arbeitsmaschine 100 in einer schematischen Darstellung auf einem Feld 110. Die landwirtschaftliche Arbeitsmaschine 100 umfasst dabei üblicherweise ein Zugfahrzeug 101 und ein Arbeitsgerät 102. Dabei müssen Zugfahrzeug und Arbeitsgerät nicht notwendigerweise als zwei separate Fahrzeuge ausgebildet sein sondern können auch in einem Fahrzeug zusammengefasst sein. Weiterhin kann das Arbeitsgerät von dem Zugfahrzeug 101 lösbar sein, so dass mit Hilfe ein und desselben Zugfahrzeugs unterschiedliche Arbeitsgeräte 102 verwendet werden können. Als Arbeitsgeräte kommen sämtliche bekannte Maschinen aus der Landwirtschaftstechnik in Frage, wie beispielsweise Feldspritze, Düngerverteiler, Kreiselegge, Sämaschine und so fort.

Die Arbeitsmaschine 100 umfasst erfindungsgemäß eine Sensoreinrichtung 103, die derart an der landwirtschaftlichen Arbeitsmaschine 100 angebracht ist, dass sie wenigstens zweidimensionale Informationen über ein vor der Arbeitsmaschine 100 liegendes Gelände erfassen kann. Dieses Gelände kann beispielsweise der Abschnitt 104 des zu bearbeitenden Feldes 110 sein, der sich vor der landwirtschaftlichen Arbeitsmaschine befindet. Vorzugsweise ist die Sensoreinrichtung 103 so ausgebildet, dass sie während der Bewegung der Arbeitsmaschine 100 mit der Geschwindigkeit v über das zu bearbeitende Feld kontinuierlich oder in bestimmten zeitlichen Abständen wenigstens zweidimensionale Informationen über das Feld erfasst, so dass abschließend die entsprechende Information für das gesamte Feld zur Verfügung steht.

In der dargestellten Ausführungsform ist die Sensoreinrichtung 103 aus zwei separaten Einrichtungen an den gegenüberliegenden Enden des Arbeitsgeräts 102 (hier beispielsweise eine Feldspritze) gebildet, wobei diese Einrichtungen in Fahrtrichtung ausgerichtet sind, sodass sie Informationen über das vor dem Arbeitsgerät 102 liegende Gelände 104 erfassen.

Bei diesen Informationen kann es sich um, je nach verwendetem Arbeitsgerät, für die Bearbeitung des Feldes relevante Informationen, wie beispielsweise die Bestandshöhe von bereits auf dem Feld gewachsenen Pflanzen, die Dichte des Bestands, Qualität und Eigenschaften des Bodens, wie beispielsweise Bodenfeuchte oder Ähnliches handeln. Zu diesem Zweck kann die Sensoreinrichtung 103 auf unterschiedlichste Art und Weise ausgebildet sein. Sie kann beispielsweise eine Kamera umfassen oder einen Laser und eine entsprechende Empfangseinheit zum Erfassen der reflektierten Laserstrahlung von dem Bestand oder vom Boden. Weiterhin können andere Sensoren, wie Mikrowellensensoren, Schallsensoren oder Ähnliches zum Einsatz kommen.

Da jedes Arbeitsgerät gegebenenfalls unterschiedliche Anforderungen an die zu erfassenden Informationen stellt (Art der Information und Genauigkeit beispielsweise), ist es vorteilhaft, wenn die Sensoreinrichtung 103 direkt am Arbeitsgerät angeordnet ist. So kann bei Austausch des Arbeitsgeräts direkt die Sensoreinrichtung ausgetauscht werden.

Es kann jedoch auch vorgesehen sein, dass die Sensoreinrichtung 103 an der Zugmaschine 101 angeordnet ist, um ein uneingeschränktes Blickfeld zu gewährleisten. Wenn die Zugmaschine 101 für unterschiedliche Arbeitsgeräte 102 verwendet wird, ist es in dieser Ausführungsform besonders vorteilhaft, wenn die Sensoreinrichtung 103 austauschbar ist, so dass je nach Arbeitsgerät eine entsprechende Sensoreinrichtung an der Arbeitsmaschine 100 angebracht werden kann, um die für die Funktion des Arbeitsgeräts notwendigen Informationen über das vor der Arbeitsmaschine 100 liegende Gelände zu erfassen.

Erfindungsgemäß ist eine hier nicht dargestellte Steuereinrichtung in der Arbeitsmaschine 100, beispielsweise im Arbeitsgerät 102 selbst oder in der Zugmaschine 101 vorgesehen, die die von der Sensoreinrichtung 103 erfassten Informationen auswerten kann. Diese Auswertung kann auf unterschiedlichste Art und Weise erfolgen, hat jedoch als Ergebnis Parameter, die eine Steuerung der Funktion des Arbeitsgeräts erlauben. So kann die Steuereinrichtung beispielsweise aus den von der Sensoreinrichtung 103 aufgenommenen Bestandshöhen eine Arbeitshöhe für das Arbeitsgerät 102, wie beispielsweise einen Düngerstreuer, errechnen und entsprechend der errechneten Arbeitshöhe zu der jeweiligen Bestandshöhe die Arbeitshöhe des Arbeitsgeräts 102 einstellen.

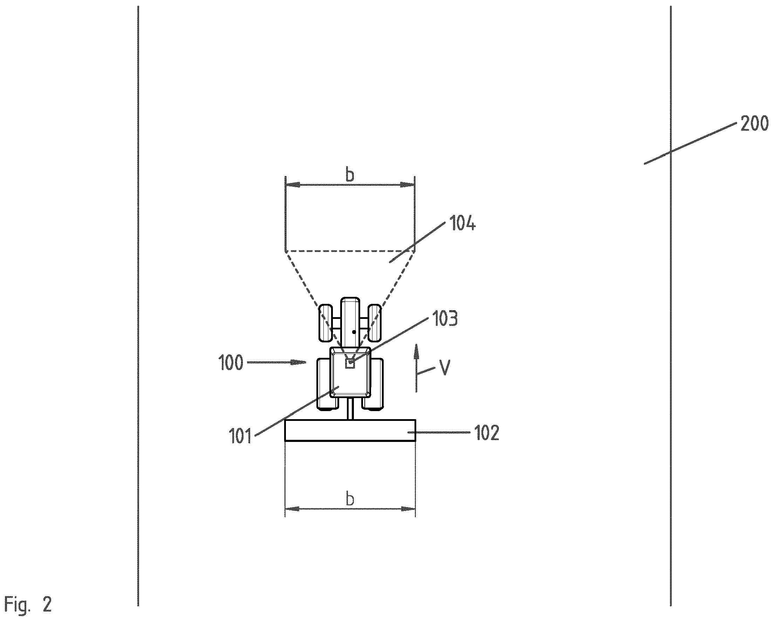

Fig. 2 zeigt eine erfindungsgemäße Arbeitsmaschine 100, wie sie beispielsweise auch in Fig. 1 dargestellt wird, auf einem Feld 200 in Draufsicht. Arbeitsgeräte 102 verfügen zumeist über eine bestimmte Arbeitsbreite b, beispielsweise 3 m, 5 m, 6 m oder 12 m. Um die Funktionen des Arbeitsgeräts 102 möglichst effektiv über die gesamte Arbeitsbreite zu steuern, ist vorgesehen, dass die Sensoreinrichtung 103 die zweidimensionalen Informationen über das vor der Arbeitsmaschine 100 liegende Gelände 104 auf dem Feld 200 wenigstens auf einer Breite b, die der Arbeitsbreite b des Arbeitsgeräts 102 entspricht, erfasst. Das bedeutet, dass beispielsweise die Kamera einen so großen Blickwinkel haben sollte, dass sie in einer bestimmten Entfernung von der landwirtschaftlichen Arbeitsmaschine 100 (beispielsweise in 10 m Entfernung oder in 15 m Entfernung) ein Gebiet mit einer Breite b, die der Arbeitsbreite des Arbeitsgeräts entspricht, erfassen kann und die entsprechenden Informationen aufnehmen kann. Bei Verwendung von einem Lasersensor ist der Lasersensor so eingestellt, dass er auch über die Arbeitsbreite b Informationen über das Gelände 104 erfassen kann. In Abhängigkeit der so erfassten Informationen kann dann die Funktion des Arbeitsgeräts 102 als Ganzes oder, sofern das Arbeitsgerät 102 aus einzeln ansteuerbaren Komponenten besteht, die Funktion der einzelnen Komponenten gesteuert werden.

Da die Informationen der Sensoreinrichtung der beschriebenen Steuereinrichtung bereits vor Erreichen des entsprechenden Geländes zur Verfügung stehen, kann die Steuereinheit das Arbeitsgerät 102 rechtzeitig ansteuern, um sobald das Arbeitsgerät 102 das entsprechende Gelände 104 überfährt, beispielsweise die Arbeitshöhe oder die Saattiefe entsprechend den vorher aufgenommenen Informationen zu realisieren.

Um diesen Vorteil weiter auszunutzen, kann vorgesehen sein, dass die Arbeitsmaschine 100, wie es in Fig. 1 und 2 dargestellt ist, zusätzlich zu der Sensoreinrichtung 103 weitere Bewegungs- oder GPS-Sensoren umfasst, die Ort, Geschwindigkeit und vorzugsweise auch Beschleunigung der Arbeitsmaschine erfassen können. Unter Berücksichtigung dieser Daten und den aufgenommenen zweidimensionalen Informationen über das Gelände 104 kann die Steuereinheit dann zusätzlich berechnen oder extrapolieren, wann das Arbeitsgerät 102 voraussichtlich auf dem Gelände 104 ankommen wird und dementsprechend die Funktion des Arbeitsgeräts steuern. Da die Sensoreinrichtungen kontinuierlich oder zumindest in Zeitintervallen permanent Informationen von dem Gelände sammelt, wird der Steuereinrichtung somit genug Information zur Verfügung gestellt, um das Arbeitsgerät während des gesamten Betriebs über das Gelände kontinuierlich zu steuern.

Dabei können auch Latenzzeiten Berücksichtigung finden. So erfordert es beispielsweise eine gewisse Zeit, um die Arbeitshöhe eines Arbeitsgeräts zu verändern. Stellt die Steuereinrichtung fest, dass aufgrund der zweidimensionalen Informationen über das vor der Arbeitsmaschine liegenden Geländes eine Anpassung der Arbeitshöhe des Arbeitsgeräts 102 zu einem bestimmten Zeitpunkt notwendig ist, so kann die Steuereinheit unter Berücksichtigung der momentanen Geschwindigkeit der Arbeitsmaschine 100 aber auch unter Berücksichtigung der für die Verstellung der Arbeitshöhe von der Ausgangshöhe auf die gewünschte Höhe bestimmen, wann das Steuersignal an das Arbeitsgerät 102 übertragen werden muss, um sicherzustellen, dass an dem vorgesehenen Ort die vorgesehene Arbeitshöhe erreicht wird.

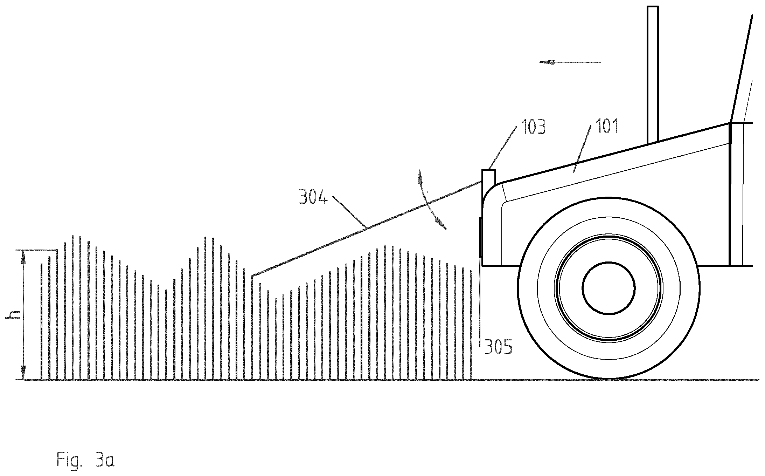

Fig. 3a zeigt dazu eine speziellere Ausführung der erfindungsgemäßen landwirtschaftlichen Arbeitsmaschine, wie sie beispielsweise in Fig. 1 und Fig. 2 dargestellt ist. Der Einfachheit halber ist zu diesem Zweck in Fig. 3a nur das Zugfahrzeug 101 teilweise dargestellt. Fig. 3a veranschaulicht das Erfassen einer Bestandshöhe h des vor der landwirtschaftlichen Arbeitsmaschine befindlichen Bestands auf einem Feld, also die Höhe der auf dem Feld gewachsenen Pflanze. In Fig. 3a ist die Sensoreinrichtung 103 als Laser ausgebildet, der kontinuierlich oder in kurzen aufeinanderfolgenden Abständen einen Laserstrahl 304 in einem vorbestimmten Winkel in Richtung des Feldes schickt. Entweder direkt in der Sensoreinrichtung 103 oder separat davon kann ein Detektor 305 vorgesehen sein, der die reflektierte Laserstrahlung auffängt. Entweder direkt in dem Detektor 305 bzw. der Sensoreinrichtung 103 oder in der Steuereinrichtung kann dann der Laufzeitunterschied bestimmt und daraus die Höhe und die Entfernung des Bestands ermittelt werden. Um die Genauigkeit der erfassten Informationen zu erhöhen, kann auch vorgesehen sein, dass der von der Sensoreinrichtung 103 emittierte Laserstrahl verschwenkbar ist, wie mit der dargestellten Pfeilrichtung angedeutet wird. So können in einem deutlich größeren Bereich des vor der Arbeitsmaschine befindlichen Geländes Informationen gesammelt werden.

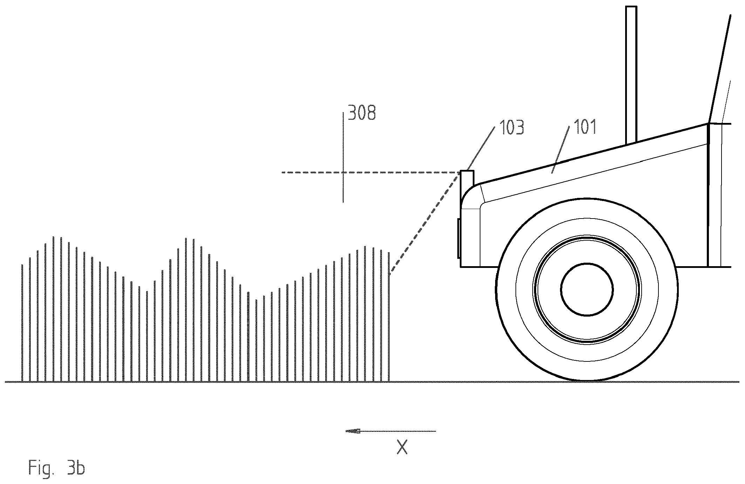

Fig. 3b zeigt eine andere Ausführungsform, bei der die Sensoreinrichtung 103 eine Kamera umfasst, die ein einem bestimmten Blickwinkel 308 beispielsweise mit einer Bildwiederholungsfrequenz von 20 Bildern pro Sekunde oder 40 Bildern pro Sekunde oder mehr das vor der Arbeitsmaschine befindliche Gelände filmt. Aus den so erfassten einzelnen Bildinformationen kann die Steuereinrichtung mittels bekannter Bildverarbeitungsprogramme eine Bestandshöhe des vor der Arbeitsmaschine befindlichen Bestands ermitteln. Aufgrund der bei Kameras üblicherweise festgelegten Bildwiederholungsrate erfolgt die Abstandsbestimmung hier in festgelegten Zeitintervallen.

Es sei erwähnt, dass das Erfassen von Informationen jedoch auch in vorteilhafter Weise an die Geschwindigkeit der Arbeitsmaschine gekoppelt sein kann. Um beispielsweise eine stets konstante Erfassung von Informationen in Bezug auf den zurückgelegten Weg der Arbeitsmaschine zu gewährleisten, kann vorgesehen sein, dass die Frequenz, mit der die Informationen erfasst werden (bzw. das Zeitintervall zwischen zwei Erfassungszeitpunkten) in Abhängigkeit von der Geschwindigkeit der Arbeitsmaschine eingestellt wird. Bewegt sich die Arbeitsmaschine beispielsweise mit einer hohen Geschwindigkeit, so sollte das Erfassen von Informationen möglichst häufig pro Sekunde stattfinden, um sicherzustellen, dass die Informationen möglichst lückenlos sind. Bewegt sich die Arbeitsmaschine jedoch mit deutlich langsamerer Geschwindigkeit, so genügt eine weniger hohe Erfassungsfrequenz, so dass die Zeitintervalle zwischen den einzelnen Erfassungszeitpunkten größer sein können. So wird verhindert, dass zu viele redundante Informationen über ein und dasselbe Gebiet erfasst werden.

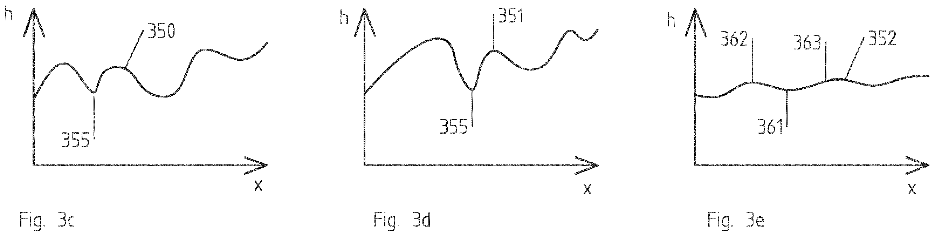

Ungeachtet dessen, ob die Informationen kontinuierlich erfasst werden, wie dies in Fig. 3c schematisch dargestellt ist, oder ob sie zu bestimmten Zeitintervallen erfasst werden, wie in Fig. 3d dargestellt, ermittelt die Steuereinrichtung oder ein entsprechend zugeordneter Mikroprozessor oder Computer eine bestimmte Eigenschaft des vor der Arbeitsmaschine befindlichen Geländes. Die hier gewählte Eigenschaft ist die Bestandshöhe h. Dazu wird jedem Ort x auf der in Fig. 3c dargestellten Kurve 350 bzw. der in Fig. 3d dargestellten Kurve 351, eine Bestandshöhe h zugeordnet. In Fig. 3d erfolgt dies nicht für jeden Punkt x auf dem Gelände sondern entsprechend der Erfassungsfrequenz der Informationen (beispielsweise 20 Bilder pro Sekunde bei Verwendung einer Kamera). Daraus ergibt sich auch in Abhängigkeit der Geschwindigkeit der Arbeitsmaschine eine Informationsdichte bzw. Punktdichte in der Kurve 351, die, sofern die Erfassungsfrequenz nicht mit der Geschwindigkeit verändert wird, durchaus schwanken kann. Während bei kontinuierlicher bzw. nahezu kontinuierlicher Informationserfassung, wie in Fig. 3c dargestellt, eine durchgängige Kurve für die Bestandshöhe angegeben werden kann, so erfordert die Informationserfassung in bestimmten zeitlichen Abständen, wie sie in Fig. 3d dargestellt ist, jedoch gegebenenfalls eine Interpolation zwischen den einzelnen Punkten.

In einer Ausführungsform der Erfindung ist jedoch vorgesehen, dass aus den insgesamt gewonnenen Informationen und unter Berücksichtigung eventueller ökonomischer oder technischer Gesichtspunkte aus den Informationen der Sensoreinrichtung 103 von der Steuereinrichtung eine Steuerkurve für das Arbeitsgerät abgeleitet wird. Diese kann beispielsweise bei der Steuerung der Arbeitshöhe der Arbeitsmaschine in Abhängigkeit von der Bestandshöhe umfassen, dass die Steuereinrichtung aus den aufgenommen Informationen eine effektive bzw. optimale Arbeitshöhe für das Arbeitsgerät ermittelt, wie diese in Fig. 3e dargestellt ist. Diese optimale Arbeitshöhe kann von der Steuereinrichtung beispielsweise so geregelt werden, dass zu große Amplituden bei der Einstellung der Arbeitshöhe des Arbeitsgeräts vermieden werden und dementsprechend die dargestellten Extreme 355 in den Fig. 3c und 3d hier nur durch ein leichtes Absenken der Arbeitshöhe in Fig. 3e im Bereich 361 berücksichtigt werden. So kann zum einen sichergestellt werden, dass zwar die unterschiedlichen Eigenschaften des vor der Arbeitsmaschine befindlichen Geländes beispielsweise mit Hinblick auf die Bestandshöhe Berücksichtigung finden, jedoch ein Gleichgewicht zwischen den erfassten Daten und anderen Randbedingungen, wie beispielsweise den technischen Charakteristika des Arbeitsgeräts eingehalten wird.

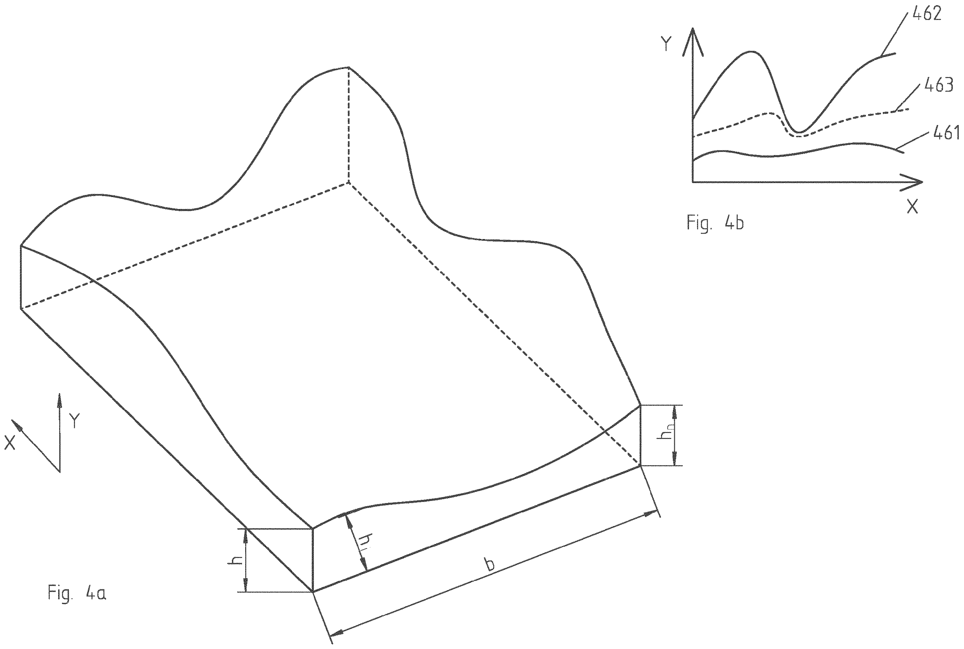

In Fig. 4 ist eine weitere Ausführungsform zur Bestimmung der optimalen Arbeitshöhe dargestellt. Dazu wird die Information über die gesamte Arbeitsbreite b der Arbeitsmaschine bzw. des Arbeitsgeräts von der Sensoreinrichtung aufgenommen, wie dies bereits mit Bezug auf Fig. 2 beschrieben wurde. Dazu werden, wie in Fig. 4a dargestellt, über die Arbeitsbreite b unterschiedliche Höhen h₁ über hᵢ bis hₙ bestimmt. Aus diesen kann eine minimale Höhe und eine maximale Höhe über den gesamten Bereich ermittelt werden. Über die Entfernung x sind die minimalen Höhen 461 und die maximalen Höhen 462 des Bestands in Fig. 4b dargestellt. Nun kann mit Hilfe der Steuereinrichtung bzw. eines entsprechend zugeordneten Computers oder Mikroprozessors, die optimale Arbeitshöhe 463 ermittelt werden, die im Normalfall zwischen der minimalen Höhe und der maximalen Höhe des Bestands liegt. Dabei kann so vorgegangen werden, dass über alle Höhen h₁ bis hₙ an einem bestimmten Punkt x gemittelt wird und der entsprechende Mittelwert als Arbeitshöhe festgelegt wird. Hier kann jedoch auch eine Gewichtung erfolgen. Diese Gewichtung kann beispielsweise berücksichtigen, wie oft bestimmte Höhen, die deutlich über dem errechneten Mittelwert oder deutlich unter dem errechneten Mittelwert liegen, gemessen wurden. Diese können dann beispielsweise weniger Gewicht bei der Errechnung der optimalen Arbeitshöhe eingeräumt werden. So können Bestandshöhen, die um bis zu 20 % vom Mittelwert abweichen, in die Berechnung beispielsweise mit einer Gewichtung von 0,5 eingehen. Noch weiter vom Mittelwert abweichende Höhen könnten nur noch mit 0,1 in die Berechnung eingehen. Extreme, und damit sehr seltene Abweichungen vom Mittelwert, werden so herausgerechnet.

Obwohl die Berechnung hier als über die gesamte Arbeitsbreite b durchgeführt dargestellt ist, ist es natürlich, wie oben beschrieben auch möglich, dass für Arbeitsgeräte, die über separat ansteuerbare Segmente verfügen, eine Erfassung von zweidimensionalen Informationen gesondert für jedes Segment von der Steuereinheit betrachtet wird. Dies bedeutet, dass obwohl die Sensoreinrichtung beispielsweise die Gesamtmenge an Informationen über das vor der Arbeitsmaschine liegende Gelände auf der Arbeitsbreite b erfasst, die Steuereinheit die gesammelten Informationen entsprechend den Segmenten des Arbeitsgeräts unterteilt und beispielsweise analog zu den oben beschriebenen Verfahren die Funktionen der einzelnen Segmente des Arbeitsgeräts separat ansteuert.

In den Fig. 3 und 4 wurde insbesondere auf die Bestandshöhe Bezug genommen, die von der Sensoreinrichtung gemessen und von der Steuereinrichtung verarbeitet wird, um eine optimale Arbeitshöhe für das Arbeitsgerät zu errechnen. Wie jedoch weiter oben beschrieben, können grundsätzlich sämtliche erfassten Informationen genutzt werden, um irgendwelche Funktionen des Arbeitsgeräts der landwirtschaftlichen Arbeitsmaschine in Abhängigkeit dieser Informationen zu steuern.

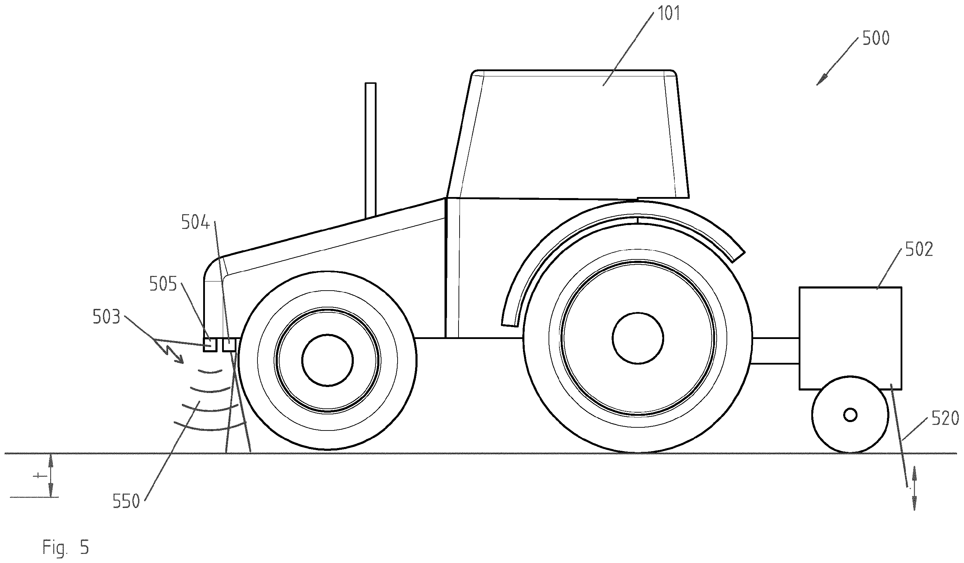

Dazu zeigt Fig. 5 die Anwendung der erfindungsgemäßen Vorrichtung und des erfindungsgemäßen Verfahrens auf eine Sämaschine 500. Diese Sämaschine umfasst wie üblich ein Zugfahrzeug 101 und ein entsprechendes Arbeitsgerät 502, das Saatgut aussäen kann. Üblicherweise wird dazu das Saatgut über die entsprechenden Einbettungswerkzeuge in die Säscharen eingebracht, wobei dies in einer bestimmten Tiefe im Boden geschieht. In der Realität ist es so, dass die Saat am besten gedeiht, wenn bestimmte Bedingungen hinsichtlich der Bodenfeuchte und der Glutengröße bzw. der grundsätzlichen Struktur des Bodens erfüllt sind. Auch dies kann mit der erfindungsgemäßen landwirtschaftlichen Arbeitsmaschine 500 berücksichtigt werden.

Dazu umfasst die landwirtschaftliche Arbeitsmaschine 500 als Sensoreinrichtung 503 ein System aus einem Mikrowellensensor 505 und einer Kamera 540. Diese können, wie hier dargestellt, am Zugfahrzeug 101 nach unten gerichtet angeordnet sein, sie können aber auch, wie bereits in den vorherigen Figuren beschrieben, an der Vorderseite oder auf dem Dach des Zugfahrzeugs 101 angeordnet sein. Der Mikrowellensensor misst dabei kontinuierlich oder in kurzen Zeitabständen die Bodenfeuchte des vor der Arbeitsmaschine 500 befindlichen Geländes. Dazu kann beispielsweise ein Reflexionsverfahren genutzt werden, das eine Messung der Bodenfeuchte kontinuierlich und berührungslos ermöglicht. Die Kamera bzw. das Bildaufnahmegerät 504 hingegen erfasst die Bodenkontur des Geländes. Es stehen dann also sowohl Angaben zur Bodenfeuchte als auch zur Bodenkontur des vor der Arbeitsmaschine 500 befindlichen Geländes zur Verfügung. Diese können beispielsweise entsprechend Fig. 3 oder 4 genutzt werden, um eine Saattiefe zu berechnen. Dabei kann analog wie in Fig. 4b vorgegangen werden, so dass eine optimale Saattiefe über die gesamte Arbeitsbreite berechnet wird bzw. wenn die einzelnen Einbettungswerkzeuge separat ansteuerbar sind, für jedes Einbettungswerkzeug eine geeignete Saattiefe bestimmt wird. Analog zur Fig. 3 oder Fig. 4b kann die Saattiefe natürlich über die Arbeitsbreite des Arbeitsgeräts 502 aber auch in Bewegungsrichtung der Arbeitsmaschine 500 variieren.

Grundsätzlich kann bei der Bestimmung der Saattiefe bzw. der optimalen Saattiefe so vorgegangen werden, dass die erfassten Daten des Mikrowellensensors 505 zunächst für sich ausgewertet werden und anhand dessen eine optimale Saattiefe in Abhängigkeit der Bodenfeuchte bestimmt wird. Parallel dazu oder in einem weiteren Schritt können die aufgenommenen Bilddaten der Kamera 504 genutzt werden, um anhand der Bodenkontur eine optimale Saattiefe zu bestimmen. In einem weiteren Schritt können die so ermittelten optimalen Saattiefen kombiniert und eine resultierende optimale Saattiefe t bestimmt werden. Auch hier kann beispielsweise den von der Kamera oder den von dem Mikrowellensensor aufgenommenen Informationen gegebenenfalls ein höheres Gewicht bei der Bestimmung der resultierenden optimalen Saattiefe eingeräumt werden, oder einige gemessene Werte weniger stark berücksichtigt werden.

Die beschriebene landwirtschaftliche Arbeitsmaschine aber auch das erfindungsgemäße Verfahren sind nicht nur auf die Anwendung von beispielsweise Sämaschinen (Änderung der Saattiefe) anwendbar, sondern können grundsätzlich in allen landwirtschaftlichen Arbeitsmaschinen vorteilhaft genutzt werden, sofern die Funktionsweise des Arbeitsgeräts von den äußeren Bedingungen des Geländes bzw. des Bestands abhängen. Es sei auch erwähnt, dass es mit Hilfe der vorgesehenen Sensoreinrichtung natürlich nicht nur möglich ist, zweidimensionale Informationen (Bestandshöhe über die Arbeitsbreite) zu ermitteln sondern, wie dies beispielsweise in Fig. 4a gezeigt ist, auch dreidimensionale Informationen ermittelt werden können.

## Patentansprüche

1. Landwirtschaftliche Arbeitsmaschine (100) umfassend ein Zugfahrzeug (101), ein Arbeitsgerät (102), eine Sensoreinrichtung (103) zum Erfassen von wenigstens 2D-Informationen und eine Steuereinrichtung, die mit der Sensoreinrichtung (103) und dem Arbeitsgerät (102) verbunden ist und geeignet ist, wenigstens eine Funktion des Arbeitsgeräts (102) in Abhängigkeit der von der Sensoreinrichtung (103) erfassten Information zu steuern,
**dadurch gekennzeichnet, dass**
die Sensoreinrichtung (103) so angeordnet ist, dass sie 2D-Informationen eines vor der Arbeitsmaschine (100) liegenden Geländes (104) erfassen kann und dass die Sensoreinrichtung einen Mikrowellensensor (505) und ein Bildaufnahmegerät (504) umfasst, wobei der Mikrowellensensor (505) die Bodenfeuchte ermitteln und das Bildaufnahmegerät (504) die Bodenkontur bestimmen kann, wobei die Steuereinheit in Abhängigkeit der Bodenfeuchte und Bodenkontur eine geeignete Saattiefe (t) bestimmen kann.

2. Arbeitsmaschine nach Anspruch 1, **dadurch gekennzeichnet, dass** die Sensoreinrichtung (103) ausgebildet ist, Informationen des vorder Arbeitsmaschine (100) liegenden Geländes (104) kontinuierlich oder in bestimmten Zeitintervallen zu erfassen.

3. Arbeitsmaschine nach Anspruch 1 oder 2, **dadurch gekennzeichnet, dass** die Sensoreinrichtung (103) ausgebildet ist, Informationen des vorder Arbeitsmaschine (100) liegenden Geländes (104) wenigstens über einen Bereich, der der Arbeitsbreite (b) des Arbeitsgeräts (102) entspricht, zu erfassen.

4. Arbeitsmaschine nach einem der Ansprüche 1 bis 3, **dadurch gekennzeichnet, dass** die Sensoreinrichtung (103) am Zugfahrzeug (101) und/oder am Arbeitsgerät (102) angeordnet ist.

5. Arbeitsmaschine nach einem der Ansprüche 1 bis 4, **dadurch gekennzeichnet, dass** die Sensoreinrichtung (103) 3D-Informationen eines vor der Arbeitsmaschine (100) liegenden Geländes (104) erfassen kann.

6. Arbeitsmaschine nach einem der Ansprüche 1 bis 5, **dadurch gekennzeichnet, dass** die Arbeitsmaschine einen Geschwindigkeitssensor umfasst, der eine aktuelle Geschwindigkeit der Arbeitsmaschine messen und ein für die Geschwindigkeit indikatives Signal an die Steuereinheit übertragen kann, wobei die Steuereinheit die wenigstens eine Funktion des Arbeitsgeräts (102) basierend einer Extrapolation der Geschwindigkeit der Arbeitsmaschine und einem so ermittelten Zeitpunkt, wann das Arbeitsgerät sich über einem von der Sensoreinrichtung (103) vermessenen Bereich des Geländes (104) befindet, zu steuern.

7. Arbeitsmaschine nach einem der Ansprüche 1 bis 6, **dadurch gekennzeichnet, dass** die Sensoreinrichtung (103) ein optischer Sensor ist oder einen optischen Sensor umfasst, wobei die Sensoreinrichtung Bestandshöhen (h) von auf dem vor der Arbeitsmaschine liegenden Gelände befindlichen Bestand messen kann und die Steuereinheit eine Arbeitshöhe des Arbeitsgeräts (102) in Abhängigkeit der Bestandshöhe (h) steuert.

8. Arbeitsmaschine nach Anspruch 7, **dadurch gekennzeichnet, dass** die Sensoreinrichtung (103) eine Kamera ist, und die Steuereinheit aus der Bildinformation von durch die Kamera aufgenommenen Bilder eine Bestandshöhe (h) bestimmen kann, oder dass die Sensoreinrichtung (103) ein Laser ist, der eine Abstandsmessung zu vor der Arbeitsmaschine (103) befindlichem Bestand durchführen kann, und die Steuereinheit aus der Abstandsmessung eine Bestandshöhe (h) errechnen kann.

9. Arbeitsmaschine nach Anspruch 7 oder 8, **dadurch gekennzeichnet, dass** die Steuereinheit aus sämtlichen zu einem Zeitpunkt ermittelten Bestandshöhen (h1, hi, hn) eines bestimmten Bereichs des Geländes eine optimale Arbeitshöhe (463) für das Arbeitsgerät errechnen kann.

10. Arbeitsmaschine nach zumindest einem der vorstehenden Ansprüche, **dadurch gekennzeichnet, dass** der Mikrowellensensor (505) nach dem Reflexionsverfahren arbeitet und kontinuierlich und berührungslos die Bodenfeuchte ermitteln kann.

11. Arbeitsmaschine nach zumindest einem der vorstehenden Ansprüche, **dadurch gekennzeichnet, dass** die Steuereinheit aus allen zu einem Zeitpunkt ermittelten Bodenfeuchten und Bodenkonturen eines bestimmten Bereichs des Geländes eine optimale Saattiefe bestimmen kann.

12. Verfahren zum Steuern eines Arbeitsgeräts einer landwirtschaftlichen Arbeitsmaschine (100),
**dadurch gekennzeichnet, dass**
2D-Informationen eines vor der Arbeitsmaschine (100) liegenden Geländes (104) erfasst werden und wenigstens eine Funktion des Arbeitsgeräts (102) in Abhängigkeit der 2D-Informationen gesteuert wird und dass mittels eines Mikrowellensensors (505) die Bodenfeuchte und mittels eines Bildaufnahmegeräts (504) die Bodenkontur des vor der Arbeitsmaschine befindlichen Geländes bestimmt und in Abhängigkeit der Bodenfeuchte und Bodenkontur eine geeignete Saattiefe (t) ermittelt wird.

13. Verfahren nach Anspruch 12, **dadurch gekennzeichnet, dass** Informationen des vor der Arbeitsmaschine (100) liegenden Geländes (104) kontinuierlich oder in bestimmten Zeitintervallen erfasst werden.

14. Verfahren nach Anspruch 13, **dadurch gekennzeichnet, dass** die Zeitintervalle variabel sind und in Abhängigkeit von der Geschwindigkeit und/oder Beschleunigung der Arbeitsmaschine (100) eingestellt werden.

15. Verfahren nach einem der Ansprüche 12 bis 14, **dadurch gekennzeichnet, dass** Informationen über das vor der Arbeitsmaschine (100) liegende Gelände (104) wenigstens über die Arbeitsbreite (b) des Arbeitsgeräts (102) bestimmt werden.

16. Verfahren nach einem der Ansprüche 12 bis 15, **dadurch gekennzeichnet, dass** 3D-Informationen eines vor der Arbeitsmaschine (100) liegenden Geländes (104) erfasst werden.

17. Verfahren nach einem der Ansprüche 13 bis 16, **dadurch gekennzeichnet, dass** die Funktion des Arbeitsgeräts (102) in Abhängigkeit der Informationen über das Gelände (104) zu einem Zeitpunkt gesteuert wird, der abhängig vom Zeitpunkt, zu dem die Informationen über das Gelände (104) aufgenommen wurden, und abhängig von der momentanen Geschwindigkeit der Arbeitsmaschine (100) ist.

18. Verfahren nach einem der Ansprüche 13 bis 17, **dadurch gekennzeichnet, dass** mittels eines optischen Sensors Bestandshöhen (h) von auf dem vor der Arbeitsmaschine liegenden Gelände (104) befindlichen Bestand gemessen werden und die Arbeitshöhe des Arbeitsgeräts (102) in Abhängigkeit der Bestandshöhen (h) eingestellt wird.

19. Verfahren nach Anspruch 18, **dadurch gekennzeichnet, dass** basierend auf von einer Kamera aufgenommenen Bildinformationen des vor der Arbeitsmaschine (100) befindlichen Bestands Bestandshöhen (h) ermittelt werden oder dass eine Abstandsmessung zum Bestand auf dem vor der Arbeitsmaschine befindlichen Gelände durch einen Laser erfolgt und aus dem bestimmten Abstand eine Bestandshöhe ermittelt wird.

20. Verfahren nach Anspruch 18 oder 19, **dadurch gekennzeichnet, dass** aus den zu einem Zeitpunkt ermittelten Bestandshöhen (h1, hi, hn) eines bestimmten Bereichs des Geländes (104) eine optimale Arbeitshöhe (463) ermittelt und die Arbeitshöhe des Arbeitsgeräts(102) entsprechend dieser optimalen Arbeitshöhe (463) eingestellt wird.

21. Verfahren nach zumindest nach einem der vorstehenden Ansprüche, **dadurch gekennzeichnet, dass** die Bodenfeuchte durch Reflexion kontinuierlich und berührungslos bestimmt wird.

22. Verfahren zumindest einem der vorstehenden Ansprüche, **dadurch gekennzeichnet, dass** aus allen zu einem Zeitpunkt gemessenen Bodenfeuchten und Bodenkonturen eines bestimmten Bereiches des Geländes eine optimale Saattiefe bestimmt wird und das Arbeitsgerät in Abhängigkeit der optimalen Saattiefe gesteuert wird.

## Claims

1. Agricultural work machine (100) comprising a tractor (101), a work apparatus (102), a sensor device (103) for capturing at least 2D information items and a control device that is connected to the sensor device (103) and the work apparatus (102) and that is suitable for controlling at least one function of the work apparatus (102) depending on the information captured by the sensor device (103),
**characterized in that**
the sensor device (103) is arranged in such a way that it is able to capture 2D information items about terrain (104) lying ahead of the work machine (100) and **in that** the sensor device comprises a microwave sensor (505) and an image recording apparatus (504), wherein the microwave sensor (505) can ascertain the soil moisture and the image recording apparatus (504) can determine the ground contour, wherein the control unit can determine a suitable sowing depth (t) depending on the soil moisture and the ground contour.

2. Work machine according to Claim 1, **characterized in that** the sensor device (103) is embodied to capture information items about the terrain (104) lying ahead of the work machine (100) either continuously or at certain time intervals.

3. Work machine according to Claim 1 or 2, **characterized in that** the sensor device (103) is embodied to capture information items about the terrain (104) lying ahead of the work machine (100) over at least one region that corresponds to the work width (b) of the work apparatus (102).

4. Work machine according to any one of Claims 1 to 3, **characterized in that** the sensor device (103) is arranged at the tractor (101) and/or the work apparatus (102).

5. Work machine according to any one of Claims 1 to 4, **characterized in that** the sensor device (103) is able to capture 3D information items about terrain (104) lying ahead of the work machine (100) .

6. Work machine according to any one of Claims 1 to 5, **characterized in that** the work machine comprises a speed sensor that is able to measure the current speed of the work machine and transmit a signal that is indicative for the speed to the control unit, wherein the control unit to control the at least one function of the work apparatus (102) on the basis of an extrapolation of the speed of the work machine and a time, ascertained thus, when the work apparatus is situated over a region of the terrain (104) that was measured by the sensor device (103).

7. Work machine according to any one of Claims 1 to 6, **characterized in that** the sensor device (103) is an optical sensor or comprises an optical sensor, wherein the sensor device is able to measure crop heights (h) of crops situated on the terrain lying ahead of the work machine and the control unit controls a work height of the work apparatus (102) depending on the crop height (h).

8. Work machine according to Claim 7, **characterized in that** the sensor device (103) is a camera and the control unit can determine a crop height (h) from the image information of images recorded by the camera, or **in that** the sensor device (103) is a laser that is able to perform a distance measurement to crops situated ahead of the work machine (103) and the control unit can calculate a crop height (h) from the distance measurement.

9. Work machine according to Claim 7 or 8, **characterized in that** the control unit can calculate an ideal work height (463) for the work apparatus from all crop heights (h1, hi, hn) of a certain region of the terrain ascertained at one time.

10. Work machine according to at least one of the preceding claims, **characterized in that** the microwave sensor (505) operates according to the reflection method and said microwave sensor is able to ascertain the soil moisture in a continuous and contactless manner.

11. Work machine according to at least one of the preceding claims, **characterized in that** the control unit is able to determine an ideal sowing depth from all soil moistures and ground contours, ascertain at one time, of a certain region of the terrain.

12. Method for controlling a work apparatus of an agricultural work machine (100),
**characterized in that**
2D information items about terrain (104) lying ahead of the work machine (100) are captured and at least one function of the work apparatus (102) is controlled depending on the 2D information items, and **in that** the soil moisture is determined by means of a microwave sensor (505) and the ground contour of the terrain situated ahead of the work machine is determined by means of an image recording apparatus (504) and a suitable sowing depth (t) is ascertained depending on the soil moisture and the ground contour.

13. Method according to Claim 12, **characterized in that** information items about the terrain (104) lying ahead of the work machine (100) are captured either continuously or at certain time intervals.

14. Method according to Claim 13, **characterized in that** the time intervals are variable and are set depending on the speed and/or acceleration of the work machine (100).

15. Method according to any one of Claims 12 to 14, **characterized in that** information items about the terrain (104) lying ahead of the work machine (100) are determined, at least over the work width (b) of the work apparatus (102).

16. Method according to any one of Claims 12 to 15, **characterized in that** 3D information items about the terrain (104) lying ahead of the work machine (100) are captured.

17. Method according to any one of Claims 13 to 16, **characterized in that** the function of the work apparatus (102) is controlled depending on the information items about the terrain (104) at a time that depends on the time at which the information items about the terrain (104) were recorded and that depends on the current speed of the work machine (100).

18. Method according to any one of Claim 13 to 17, **characterized in that** crop heights (h) of crops situated on the terrain (104) lying ahead of the work machine are measured by means of an optical sensor and the work height of the work apparatus (102) is set depending on the crop heights (h).

19. Method according to Claim 18, **characterized in that** crop heights (h) are ascertained on the basis of image information items, recorded by a camera, relating to the crops situated ahead of the work machine (100) or **in that** a distance measurement to the crops on the terrain situated ahead of the work machine is performed by a laser and a crop height is ascertained from the determined distance.

20. Method according to Claim 18 or 19, **characterized in that** an ideal work height (463) is ascertained from the crop heights (h1, hi, hn) of a certain region of the terrain (104) ascertained at a time and the work height of the work machine (102) is set according to this ideal work height (463).

21. Method according to at least one of the preceding claims, **characterized in that** the soil moisture is determined by reflection in a continuous and contactless manner.

22. Method according to at least one of the preceding claims, **characterized in that** an ideal sowing depth is determined from all soil moistures and ground contours, measured at one time, in a certain region of the terrain and the work apparatus is controlled depending on the ideal sowing depth.

## Revendications

1. Machine de travail agricole (100) comprenant un véhicule tracteur (101), un outil de travail (102), un dispositif de détection (103) pour détecter au moins des informations en 2D et un dispositif de commande, lequel est relié au dispositif de détection (103) et à l'outil de travail (102) et convient pour commander au moins une fonction de l'outil de travail (102) en fonction de l'information détectée par le dispositif de détection (103),
**caractérisée en ce que**
le dispositif de détection (103) est disposé de manière à pouvoir détecter des informations en 2D d'un terrain (104) situé devant la machine de travail (100) et **en ce que** le dispositif de détection comprend un capteur micro-ondes (505) et un appareil de capture d'images (504), dans laquelle le capteur micro-ondes (505) peut déterminer l'humidité du sol et l'appareil de capture d'image (504) peut déterminer le contour du sol, dans laquelle l'unité de commande peut déterminer une profondeur de semis (t) adéquate en fonction de l'humidité du sol et du contour du sol.

2. Machine de travail selon la revendication 1, **caractérisée en ce que** le dispositif de détection (103) est réalisé pour détecter des informations du terrain (104) situé devant la machine de travail (100) de manière continue ou à intervalles de temps définis.

3. Machine de travail selon la revendication 1 ou 2, **caractérisée en ce que** le dispositif de détection (103) est réalisé pour détecter des informations du terrain (104) situé devant la machine de travail (100) au moins sur une zone, laquelle correspond à la largeur de travail (b) de l'outil de travail (102).

4. Machine de travail selon l'une des revendications 1 à 3, **caractérisée en ce que** le dispositif de détection (103) est disposé au niveau du véhicule tracteur (101) et/ou de l'outil de travail (102).

5. Machine de travail selon l'une des revendications 1 à 4, **caractérisée en ce que** le dispositif de détection (103) peut détecter des informations en 3D d'un terrain (104) situé devant la machine de travail (100).

6. Machine de travail selon l'une des revendications 1 à 5, **caractérisée en ce que** la machine de travail comprend un capteur de vitesse qui peut mesurer une vitesse actuelle de la machine de travail et transmettre à l'unité de commande un signal indicatif de la vitesse, dans laquelle l'unité de commande pour commander l'au moins une fonction de l'outil de travail (102) sur la base d'une extrapolation de la vitesse de la machine de travail et d'un moment ainsi déterminé quand l'outil de travail se trouve au-dessus d'une zone du terrain (104) mesurée par le dispositif de détection (103).

7. Machine de travail selon l'une des revendications 1 à 6, **caractérisée en ce que** le dispositif de détection (103) est un capteur optique ou comprend un capteur optique, dans laquelle le dispositif de détection peut mesurer des hauteurs de plantation (h) de plantations se trouvant sur le terrain situé devant la machine de travail et l'unité de commande assure la commande d'une hauteur de travail de l'outil de travail (102) en fonction de la hauteur de plantation (h).

8. Machine de travail selon la revendication 7, **caractérisée en ce que** le dispositif de détection (103) est une caméra et l'unité de commande peut déterminer une hauteur de plantation (h) à partir de l'information d'image d'images capturées par la caméra, ou **en ce que** le dispositif de détection (103) est un laser qui peut réaliser une mesure de distance par rapport à une plantation se trouvant devant la machine de travail (103) et l'unité de commande peut calculer une hauteur de plantation (h) à partir de la mesure de distance.

9. Machine de travail selon la revendication 7 ou 8, **caractérisée en ce que** l'unité de commande peut, à partir de l'ensemble des hauteurs de plantation (h1, hi, hn) d'une zone définie du terrain déterminées à un moment, calculer une hauteur de travail (463) optimale pour l'outil de travail.

10. Machine de travail selon l'une au moins des revendications précédentes, **caractérisée en ce que** le capteur micro-ondes (505) travaille selon le procédé par réflexion et peut déterminer l'humidité du sol en continu et sans contact.

11. Machine de travail selon l'une au moins des revendications précédentes, **caractérisée en ce que** l'unité de commande peut déterminer, à partir de toutes les humidités du sol et tous les contours de sol d'une zone définie du terrain déterminés à un moment, une profondeur de semis optimale.

12. Procédé pour commander un outil de travail d'une machine de travail agricole (100),
**caractérisé en ce que**
des informations en 2D d'un terrain (104) situé devant la machine de travail (100) sont détectées et au moins une fonction de l'outil de travail (102) est commandée en fonction des informations en 2D et **en ce qu'**au moyen d'un capteur micro-ondes (505), on détermine l'humidité du sol et au moyen d'un appareil de capture d'image (504), le contour du sol du terrain situé devant la machine de travail, et en fonction de l'humidité du sol et du contour du sol, on détermine une profondeur de semis (t) adéquate.

13. Procédé selon la revendication 12, **caractérisé en ce que** des informations du terrain (104) situé devant la machine de travail (100) sont détectées en continu ou à intervalles de temps définis.

14. Procédé selon la revendication 13, **caractérisé en ce que** les intervalles de temps sont variables et sont réglés en fonction de la vitesse et/ou de l'accélération de la machine de travail (100).

15. Procédé selon l'une des revendications 12 à 14, **caractérisé en ce que** des informations sur le terrain (104) situé devant la machine de travail (100) sont déterminées au moins sur la largeur de travail (b) de l'outil de travail (102).

16. Procédé selon l'une des revendications 12 à 15, **caractérisé en ce que** des informations en 3D d'un terrain (104) situé devant la machine de travail (100) sont détectées.

17. Procédé selon l'une des revendications 13 à 16, **caractérisé en ce que** la fonction de l'outil de travail (102) est commandée en fonction des informations sur le terrain (104) à un moment, lequel est dépendant du moment où les informations sur le terrain (104) ont été recueillies, et dépendant de la vitesse momentanée de la machine de travail (100).

18. Procédé selon l'une des revendications 13 à 17, **caractérisé en ce qu'**au moyen d'un capteur optique, on mesure des hauteurs de plantation (h) d'une plantation se trouvant sur le terrain (104) situé devant la machine de travail et règle la hauteur de travail de l'outil de travail (102) en fonction des hauteurs de plantation (h).

19. Procédé selon la revendication 18, **caractérisé en ce que**, sur la base d'informations d'image recueillies par une caméra de la plantation se trouvant devant la machine de travail (100), des hauteurs de plantation (h) sont déterminées ou **en ce qu'**une mesure de distance par rapport à la plantation sur le terrain se trouvant devant la machine de travail s'effectue par un laser et qu'à partir de la distance définie, une hauteur de plantation est déterminée.

20. Procédé selon la revendication 18 ou 19, **caractérisé en ce qu'**à partir des hauteurs de plantation (h1, hi, hn) déterminées à un moment d'une zone définie du terrain (104), on détermine une hauteur de travail (463) optimale et règle la hauteur de travail de l'outil de travail (102) conformément à cette hauteur de travail (463) optimale.

21. Procédé selon l'une au moins des revendications précédentes, **caractérisé en ce que** l'humidité du sol est déterminée en continu et sans contact par réflexion.

22. Procédé selon l'une au moins des revendications précédentes, **caractérisé en ce qu'**à partir de toutes les humidités du sol et tous les contours de sol mesurés à un moment d'une zone définie du terrain, on détermine une profondeur de semis optimale et l'outil de travail est commandé en fonction de la profondeur de semis optimale.
